# EUROPÄISCHE PATENTSCHRIFT

(11) **EP 0 602 629 B1**
(45) Veröffentlichungstag und Bekanntmachung des Hinweises auf die Patenterteilung: **05.03.1997**
(21) Anmeldenummer: 93120233.7
(22) Anmeldetag: 15.12.1993
(51) Int. Cl.: G01F 13/00, E03B 7/07, G01F 5/00

(54) **Wasserarmatur, insbesondere Wassermischarmatur mit Durchflussmesseinrichtung**
Watertap, in particular water mixer-tap with flow measuring device
Robinet à eau, en particulier mitigeur d'eau avec débitmètre

(30) Priorität: 15.12.1992 DE 9216922 U
(43) Veröffentlichungstag der Anmeldung: 22.06.1994
(73) Patentinhaber: KLUDI-ARMATUREN PAUL SCHEFFER KG, D-58730 Fröndenberg (DE)
(72) Erfinder: Pumpe, Ulrich, D-32429 Minden (DE); Rahe, Martin, D-32609 Hüllhorst (DE); Hildebrand, Rolf, D-32609 Hüllhorst (DE)
(74) Vertreter: Schulte, Jörg, Dipl.-Ing.

(56) Entgegenhaltungen:
- CH-A- 558 933
- DE-A- 3 546 504
- DE-C- 563 246
- FR-A- 708 266
- GB-A- 2 028 436
- US-A- 1 946 275
- US-A- 3 937 362
- US-A- 4 756 030

## Beschreibung

Die Erfindung betrifft eine Wasserarmatur, insbesondere Wassermischarmatur mit den Merkmalen des Oberbegriffes des Patentanspruches 1.

Bei einer Vielzahl von Tätigkeiten, z. B. im Haushalt, d.h. bei der Zubereitung von z. B. Fertiggerichten wie Trockensuppen, Kuchen, Desserts, Soßen in Pulverform usw. ist es wichtig, die erforderliche Wassermenge genau dosieren zu können.

Dazu wird heute zunächst einmal eine bestimmte Wassermenge in ein Meßbehältnis gefüllt, um dann die Wassermenge der Benutzung zuzuführen.

Eine derartige Vorgehensweise erfordert zum einen die Bereitstellung eines entsprechenden Meßbehältnisses und zum anderen einen erheblichen Zeitaufwand, wobei noch hinzu kommt, daß häufig zunächst einmal eine zu große Wassermenge in das Meßbehältnis hineingefüllt wird, um dann die überschüssige Menge ohne weitere sinnvolle Verwendung in den Abfluß zu schütten.

Dadurch wird zum einen bei Summierung dieser Vorgänge aller Haushalte eine erhebliche Menge aufbereiteten Wassers ungenutzt wieder entsorgt, so daß ein erheblicher volkswirtschaftlicher Schaden entsteht. Hinzu kommt, daß es sich hierbei häufig um erwärmtes Wasser handelt, so daß auch unter dem Gesichtspunkt der Energieersparnis erhebliche unnötige Kosten verursacht werden. Diese Methode ist daher sowohl aus ökologischer als auch ökonomischer Sicht wenig sinnvoll.

Diesem Problem wird bei einer Vielzahl von Wasserarmaturen dadurch versucht zu begegnen, daß die austretende Wassermenge möglichst genau erfaß wird.

Hierzu wird zum einen als Parameter zur Berechnung der Wassermenge der Zeitfaktor und zum anderen der anstehende Wasserdruck verwandt, um sodann die durchfließende Wassermenge innerhalb eines bestimmten Zeitraumes festzulegen.

Diese Methode hat sich jedoch in der Praxis als nicht vorteilhaft erwiesen, da zum einen ein relativ hoher technischer Aufwand vonnöten ist und zum anderen entsprechende Druckschwankungen in der Praxis die Regel sind, die das Gerät nicht erfassen kann oder nur mit hohem technischen Aufwand und zum anderen der auftretende Druck und der Zeitfaktor nicht ausreicht, um eine genaue Dosierung bzw. Messung der gegebenen Wassermenge vorzunehmen, da als weiterer Parameter z. B. die Öffnung des Verschlußventiles hinzukommt.

Um mit den herkömmlichen Methoden die durch eine Wasserarmatur abgegebene Wassermenge zu messen, ist somit ein erheblicher konstruktiver und damit finanzieller Aufwand notwendig, so daß in der Praxis derart ausgerüstete Armaturen für den täglichen Gebrauch zu kostspielig sind.

Aus der CH-A-558933 und der US-A-3937 362 ist es bekannt, in der als Meßkanal dienende Wasserzuleitung eine Einrichtung zur Messung der Durchflußmenge in Form eines Flügelrades anzuordnen. Deren Meßergebnisse werden auf einer Anzeige sichtbar gemacht. Ungenauigkeiten treten hierbei sowohl bei großen Durchflußmengen wegen des relativ hohen Strömmungswiderstandes und vor allem bei Kleinstmengen auf. Letztere können nicht erfaßt werden, weil das Flügelrad aufgrund der Reibung nicht in Drehung versetzt wird. Aus der GB-A- 2 028 436 ist es zwar grundsätzlich bekannt, das Flügelrad aus dem unmittelbaren Flüssigkeitsstrom herauszunehmen, nur wird dadurch allein der Widerstand, den das Meßrad darstellt, nicht behoben.

Der Erfindung liegt daher die Aufgabe zugrunde, eine Wasserarmatur, insbesondere Wassermischarmatur bereit zu stellen, bei der die abgegebene Wassermenge auch bei geringsten Durchflußmengen während des Wasserflusses kontinuierlich angezeigt wird, und dies bei geringem technischen Aufwand und damit geringen Kosten bei gleichzeitig hoher Meßgenauigkeit.

Diese Aufgabe wird bei einer Wasserarmatur, insbesondere Wassermischarmatur der eingangs genannten Gattung mit den Merkmalen des kennzeichnenden Teils des Patentanspruches 1 gelöst. Weitere vorteilhafte Ausgestaltungen der Erfindung sind Gegenstand der Ansprüche 2 bis 11.

Dadurch, daß ein wenigstens zeitweise von Wasser durchströmter, mit einer die Durchflußmenge erfaßenden Einrichtung versehener Kanal in Form eines Bypasses vorgesehen ist, der einen im Verhältnis zur Wasserzuleitung genau definierten Querschnitt aufweist und eine mit "intelligenter" Elektronik versehener Einrichtung zur Messung der Durchflußmenge und Anzeige vorgesehen ist, kann bei Anpassung des Strömungsquerschnittes sichergestellt werden, daß auch kleinste Mengen Wasser gemessen und angezeigt werden. Letztendlich wird die "eben" noch fließende Wassermenge ingesamt nur noch durch den Bypass geführt. Es erfolgt auf einfache und zweckmäßige Weise eine Anpassung an den veränderten Wasserdruck. So ist eine Messung des durch die Wasserarmatur abgegebenen Wassers kontinuierlich, d.h. während der Abgabe möglich. Es wird vielmehr sichergestellt, daß auf einfachste Art und Weise die Durchflußmenge unabhängig vom Öffnungsgrad des Wasserventils gemessen werden kann, ohne daß die Funktion der Wasserarmatur beeinträchtigt wird.

Des weiteren bietet dies die Möglichkeit, herkömmliche Armaturen weitgehend unverändert zu belassen, wobei auch die die Wasserarmatur zum großen Teil aufnehmenden Spülen auch bei einer nachträglichen Installation unverändert bleiben können.

Sind zwei der Zuführung von Wasser dienende Wasseführungseinrichtungen vorgesehen und handelt es sich bei den beiden Wasserzuführungseinrichtungen um eine Warm- und eine Kaltwasserzuleitung, ist jede Wasserzuleitung mit einem Meßkanal mit einem Durchflußgeber zu versehen. Dies bietet die zuvor beschriebenen konstruktiven Vorteile bei der gleichzeitigen Möglichkeit die Wasserabgabe insgesamt messen zu können, da in der Anzeigeneinrichtung lediglich die entsprechende Durchflußmenge beider Meßeinrichtungen zu addieren ist.

Ist der Meßkanal in die der Abgabe von Wasser dienenden Wasserleitung integriert, so wird dadurch sichergestellt, daß die Wasserabgabe unabhängig von der Zuleitung genau zu erfassen ist, ohne daß jede Zuleitung gesondert zu eichen ist bzw. mit einer entsprechenden Meßeinrichtung zu versehen ist. Vorteilhaft ist hier der geringe Platzbedarf.

Es ist jedoch ebenso denkbar, für jeden Wasserauslauf separat die abgegebene Wassermenge anzuzeigen oder auch wahlweise die abgegebene Wassermenge insgesamt oder separat anzuzeigen.

Ist der Meßkanal 1/10 der durch die zugeordnete Wasserführungseinrichtung strömenden Wassermenge durchführend ausgestaltet, so wird dadurch sichergestellt, daß zum einen die an die Durchflußmenge zu stellende Mindestanforderung der Wasserarmatur nicht beeinträchtigt wird, zum anderen eine ausreichend große Menge gemessen wird, um an Hand dieses Ergebnisses die Gesamtdurchflußmenge feststellen und damit anzeigen zu können. Beträgt die Querschnittsgröße des Meßkanals 1/10 der Querschnittsgröße der zugeordneten Wasserführungseinrichtung, so wird dadurch auf einfache aber um so wirkungsvollere, konstruktive Weise sichergestellt, daß 1/10 der Durchflußmenge durch den Meßkanal fließt, ohne daß hierzu gesonderte technische Hilfsmittel vonnöten wären.

Ist die Einrichtung zur wahlweisen Verringerung des Strömungsquerschnittes eine den Querschnitt verringernde Einstellschraube, so wird dadurch die Einstellbarkeit bzw. die Eichbarkeit der Einrichtung auf einfachste aber um so wirkungsvollere Weise gewährleistet.

Dadurch, daß die Anzeige nach Schließen der Armatur selbsttätig in die Nullstellung gehend ausgestaltet ist, wird sichergestellt, daß nach jedem Öffnen des Ventils wieder eine entsprechende Messung möglich ist, ohne daß hierzu rechnerische Schritte vonnöten wären.

Ist die Anzeige nach Schließen der Armatur selbsttätig zeitverzögernd in die Nullstellung gehend ausgestaltet, so wird dadurch erreicht, daß zunächst einmal der Vorgang des Wassernehmens abgeschlossen werden kann, um dann noch einmal die genommene Wassermenge kontrollieren zu können. Über die manuell zu betätigende Taste ist ebenfalls die Nullstellung zu erreichen.

Dies wird durch eine äußerst einfache und damit kostengünstige Technik erreicht, die gleichzeitig noch die Möglichkeit bietet, entsprechende Wasserentnahmen intervallweise vorzunehmen, um die Gesamtmenge des entnommenen Wassers messen zu können.

Zweckmäßigerweise ist die Elektronik einem Chip zugeordnet, so daß diese Einrichtung zur Erfassung bzw. Auswertung der Durchflußmenge praktisch an beliebiger Stelle angeordnet werden kann, wenig Platzbedarf aufweist und immer genau vorgegeben arbeitet. Insbesondere ist es vorteilhaft, wenn die Elektronik, vorzugsweise der Chip mit der Einrichtung zur Erfassung der Durchflußmenge in die Armatur integriert bzw. ihr vorgeschaltet ist, so daß auch zwischen dieser Einrichtung bzw. dem Chip und der Anzeigeeinrichtung, vorzugsweise einem Display nur kurze Wege vorhanden sind. Denn letztlich kann der Chip sogar mit in die Anzeige integriert werden.

Die Erfassung der Durchflußmenge kann optimiert werden, indem sie über die sogenannte Mikrosystemtechnik erfolgt, vorzugsweise mit Ermittlung der Parameter Druck und Zeit. Über die Mikrosystemtechnik können vorteilhafter Weise auch evtl. notwendig werdende Anpassungen vorgenommen werden bzw. Abweichungen eingerechnet werden, so daß sich Fehler minimieren bzw. ganz ausschließen lassen. Durch Einrechnen eines Faktors, der von der Durchlaufmenge bestimmt wird, können Proportionalitätsabweichungen, die sich insbesondere bei sehr kleinen Wassermengen einstellen, berücksichtigt werden, so daß das Meßergebnis gleich richtig korrigiert auf dem Display erscheinen kann. Diese Berücksichtigung der Durchlaufmenge ermöglicht es insbesondere auch, auch kleinste Varianten und dadurch auftretende Meßfehler rechtzeitig und sicher einzubeziehen und zu korrigieren.

In der Zeichnung sind zwei Ausführungsbeispiele der erfindungsgemäßen Wasserarmatur, insbesondere Wassermischarmatur dargestellt, und zwar zeigt:
- Fig. 1:: eine Draufsicht einer Wassermischarmatur mit Anzeigefeld und Reset-Taste,
- Fig. 2:: eine Seitenansicht aus Fig. 1 mit Zuleitung und Bypass mit Durchflußgeber und
- Fig. 3:: einen Querschnitt durch eine Zuleitung entsprechend eines zweiten Ausführungsbeispiels mit Strömungskanal und
- Fig. 4:: eine Gesamtansicht einer Armatur

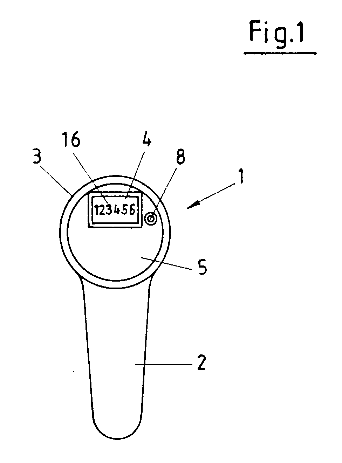

Wie aus Fig. 1 ersichtlich, ist die im hier vorliegenden Ausführungsbeispiel gezeigte Wassermischarmatur 1 als Einhebelmischarmatur ausgebildet und weist ein Betätigungsorgan oder Hebel 2 auf, das im hier vorliegenden Ausführungsbeispiel einstückig mit einem Kopfteil 3 ausgebildet ist.

Das Kopfteil 3 weist an seiner Oberseite eine Kopffläche oder Abdeckung 5 auf, die mit einer Anzeige 4 zur Anzeige, z.B. der Durchflußmenge des Wassers versehen ist und über eine Reset-Taste 8 nach der Anzeige in die Nullposition verbracht werden kann.

Im hier vorliegenden Ausführungsbeispiel weist die Einhebelmischarmatur 1 zwei Zuleitungen, d.h. Wasserzuleitungen 6 auf, die in eine hier nicht näher dargestellte, von einer Kartusche umgebene Mischkammer führen.

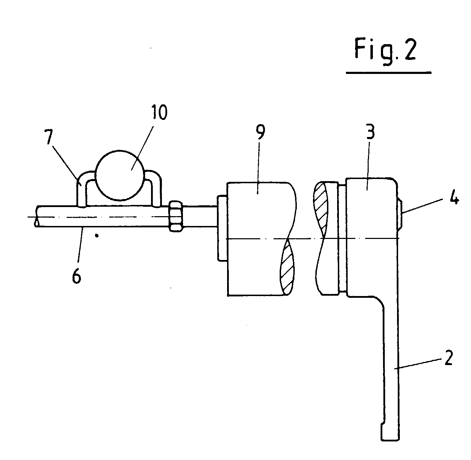

In Fig. 2 ist nur eine der beiden Wasserzuleitungen 6 sichtbar dargestellt, wobei eine der Wasserzuleitungen 6 der Zuführung von Warmwasser und die andere der Zuführung von Kaltwasser dient.

Im hier vorliegenden Ausführungsbeispiel ist jede der beiden Wasserzuleitungen 6 mit einem als Bypass ausgebildeten Meßkanal 7 ausgestattet, in die ein Durchflußgeber 10 integriert ist, der wiederum mit der im Kopfteil 3 angeordneten Anzeige 4 verbunden ist, so daß die entsprechenden Durchlaufmengen in der Anzeige 4 erscheinen.

Bei dem hier vorliegenden Ausführungsbeispiel ist der als Bypass ausgebildete Meßkanal 7 nebst dem darin integrierten Durchflußgeber 10 derart ausgestaltet, daß ein Zehntel der jeweiligen Durchflußmenge der Wasserzuleitung 6 durch den Meßkanal 7 fließt und so vom Durchflußgeber 10 derart erfaßt wird, daß diese Durchflußmenge als Signal zur Anzeige 4, z. B. über eine entsprechende elektrische Leitung gelangt, um dann entsprechend von der Elektronik multipliziert im Anzeigenfeld zu erscheinen.

Dabei wird berücksichtigt, daß im hier vorliegenden Ausführungsbeispiel jede Wasserzuleitung 6 einen entsprechenden Meßkanal 7 in Form eines Bypasses mit Durchlaufgeber 10 aufweist, so daß es neben der Multiplikation mit dem Faktor zehn zu einer Addition der Durchflußmengen beider Wasserzuleitungen 6 kommt und dann die Wasserabgabemenge insgesamt auf der Anzeigefläche erscheint.

Der Durchflußgeber 10 kann dabei ein, von durch den Meßkanal 7 strömendes Wasser umflossenes und angetriebenes Meßrad aufweisen, wobei ebenso eine elektronische Erfassung der Durchlaufmenge denkbar ist, die dann an die mit der Anzeige 4 verbundene Recheneinheit weitergeleitet wird.

Des weiteren ist im jeweiligen Meßkanal 7 eine Einrichtung vorgesehen, die der Justierung der möglichen Durchlaufmenge innerhalb einer bestimmten Zeit dient, um so die Bypassleitung 7 hinsichtlich unterschiedlicher Drücke innerhalb der Wasserleitung 6 jeweils einstellen und eichen zu können.

Im hier vorliegenden Ausführungsbeispiel befindet sich eine, den Querschnitt des Meßkanals 7 verengende, nicht dargestellte Einstellschraube im Meßkanal 7, mit deren Hilfe der Querschnitt entsprechend zu verändern ist.

Wünscht der Bediener der Einhebel-Mischarmatur 1 eine Anzeige der durchlaufenden Wassermenge, so hat er die Möglichkeit, mittels der Reset-Taste 8, bei bereits erfolgter Benutzung der Mischarmatur 1, zunächst einmal vor Öffnen der Mischarmatur 1 die Anzeige 4 im Anzeigenfeld in die Nullstellung zu bringen, um sodann nach Öffnen der Mischarmatur 1 mittels des Hebels 2 die Durchflußmenge im Anzeigefeld ablesen zu können.

Ist nun die gewünschste Abnahmemenge erreicht, so kann der Wasserhahn durch Betätigen des Hebels 2 wieder geschlossen werden.

Eine weitere Möglichkeit, die Anzeige 4 im Anzeigefeld jeweils vor Benutzung in Nullstellung zu bringen, besteht darin, daß nach Schließen der Mischarmatur 1 die Anzeige 4 selbsttätig die Nullposition unmittelbar oder aber auch zeitverzögert zurückgeht.

Des weiteren ist vorgesehen, daß die Möglichkeit besteht, mittels einer entsprechenden Tastatur eine vorbestimmte Wassermenge einzugeben, die dann im Anzeigefeld 4 erscheint, so daß nach Öffnen der Mischarmatur 1 lediglich diese vorbestimmte Wassermenge den Wasserauslauf verläßt und nach Erreichen der entsprechenden, vorbestimmten Wassermenge die Wasserzuleitungen 6 selbsttätig geschlossen werden.

Eine derartige Dosiervorrichtung kann dabei mittels einer elektrischen Steuereinrichtung eingestellt werden, so daß nach Erreichen der gewünschten Entnahmemenge ein Magnetventil die Wasserzuleitungen 6 selbsttätig schließt.

Der in Fig. 2 dargestellte Meßkanal 7 kann in hier nicht dargestellter Weise ebenso unmittelbar im Wasserauslaufbereich angeordnet sein, so daß nicht wie im hier vorliegenden Ausführungsbeispiel jeder der Wasserzuleitungen 6 mit einem entsprechenden Meßkanal 7 mit Durchflußgeber 10 ausgestattet ist, sondern lediglich ein Meßkanal 7 mit Durchlußgeber 10 im Auslaufbereich der Mischarmatur 1 angeordnet ist.

Eine derartige Anordnung ändert an der grundsätzlichen Wirkungsweise und dem Aufbau der Mischarmatur nichts.

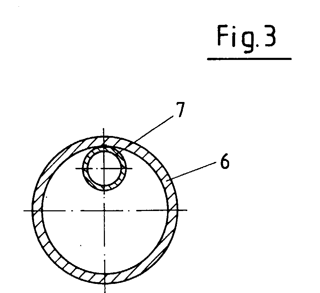

Wie aus Fig. 3 ersichtlich, ist es des weiteren denkbar, den Meßkanal 7 mit dem entsprechenden Durchflußgeber 10 in der Wasserzuleitung 6 unmittelbar anzuordnen, um so eine kompakte Lösung anzubieten, ohne jedoch auf einen Meßkanal 7 bzw. in seiner Funktion auf eine Bypassleitung verzichten zu müssen.

Wie aus Fig. 3 ersichtlich, befindet sich hier die Bypassleitung bzw. der Meßkanal 7 unmittelbar in der Wasserzuleitung 6, wobei auch hier durch den Meßkanal 7 etwa 1/10 der durch die Wasserzuleitung 6 strömenden Wassermeng strömt, so daß sichergestellt ist, daß eine ausreichende Wassermenge durch den verbleibenden Wasserzuleitungsquerschnitt gelangt.

Des weiteren kann im Bereich des Meßkanals 7 bzw. in der Bypassleitung ein Temperaturfühler angeordnet sein, der mit der Anzeige 4 in der Mischarmatur 1 gekoppelt ist, so daß mittels der Reset-Taste 8 oder einer weiteren Taste wahlweise die Durchflußmenge oder die Temperatur des abgegebenen Wassers angezeigt werden kann.

Der Wasserfluß steuert direkt den Meß- bzw. den Dosiervorgang, d.h. beim Öffnen der Mischarmatur 1 fließt bzw. beim Schließen des Hahnes steht das Wasser und schaltet entsprechend den Meßvorgang an oder aus.

Die Einrichtung ist somit universal einsetzbar, d.h. in die Wasserzuleitung 6 einer jeden Wasserarmatur mit einfachen Mitteln zu installieren und kann daher auch nachträglich eingebaut werden.

Fig. 1 zeigt die Draufsicht auf die Mischarmatur 1. Auf der Anzeige 4 sind Ziffern 16 erkennbar, wobei es sich hier in der Regel um ein übliches Display handelt, wo also nur die Ziffern erkennbar sind, die den jeweiligen Mengenwert wiedergeben. Die Reset-Taste 8 ist hier für eine mechanische Ausbildung wiedergegeben. Denkbar ist es auch, daß die Ziffernfolge 16 automatisch nach einer bestimmten Zeit gelöscht wird oder aber bei einer neuen Wasserentnahme automatisch auf Null zurückgestellt wird.

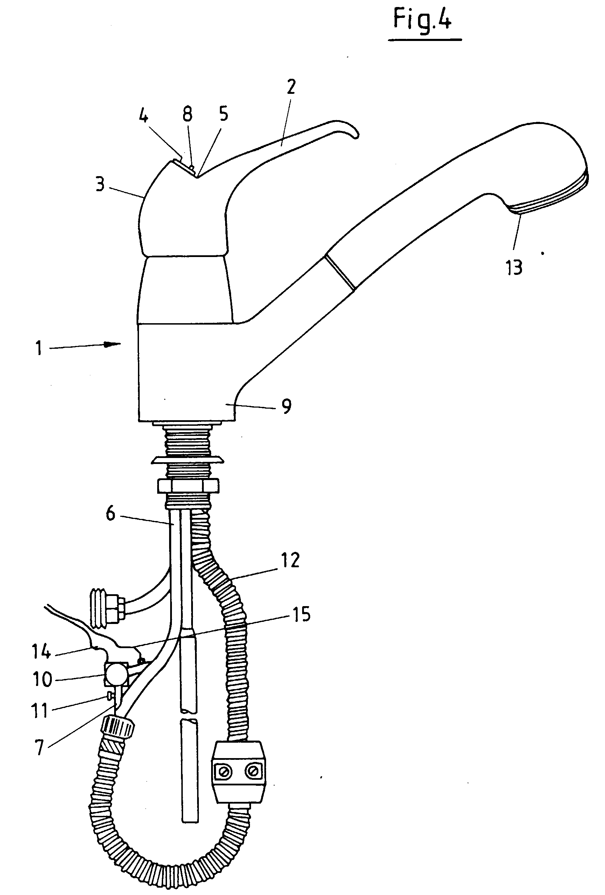

Fig. 2 zeigt die Seitenansicht der Mischarmatur 1 mit dem Hebel 2 und dem Kopfteil 3, wobei mit 9 das Drehteil bezeichnet ist, daß gemäß Fig. 4 endseitig die Küchenbrause 13 trägt.

Bei der Darstellung nach Fig. 4 ist in die Wasserzuleitung 6 ein Meßkanal 7 mit dem Durchflußgeber 10 integriert. An den Durchflußgeber 10 angeschlossen ist eine Meßleitung 14, die mit dem hier nicht dargestellten, in der Regel in die Mischarmatur 1 integrierten Chip verbunden ist. Über diesen Chip wird der von dem Durchflußgeber 10 ermittelte Mengenmeßwert umgesetzt und dann im Display bzw. der Anzeige 4 wiedergegeben.

Über die Einstellschraube 11, die vor dem Durchflußgeber 10 in den Meßkanal 7 oder die Wasserzuleitung 6 integriert ist, kann eine Nachkorrektur vorgenommen werden, insbesondere wenn sich im Laufe der Zeit Abweichungen aufgrund von Durchflußänderungen vor allem -reduzierungen ergeben oder wenn eine Anpassung auf das Meßgerät bzw. den Durchflußgeber erforderlich ist. Über die Einstellschraube 11 ist eine einfache und preisgünstige Möglichkeit gegeben, im parallelen Meßkanal 7 den notwendigen und den genauen proportionalen Durchflußwert vorzugeben. Vorteilhaft ist es dabei, den Bypass aus einem Kunststoffrohr herzustellen, um eine Verkalkung zu vermeiden.

Mit 15 ist ein Temperaturfühler bzw. sein Einsatzort bezeichnet, über den gleichzeitig auch die Temperatur des den Meßkanal 7 durchfließenden Wassers ermittelt werden kann. Dabei kann dieser hier ermittelte Wert auch für den Durchflußgeber 10 mit Berücksichtigung finden. Der Temperaturfühler kann mit einem in die Mischwasserleitung 12 integrierten Temperaturfühler kombiniert verwendet werden.

## Patentansprüche

1. Wasserarmatur, insbesondere Wassermischarmatur (1) mit wenigstens einer der Zufühung von Wasser dienenden Wasserzuleitung (6), mit wenigstens einem Wasserauslaßventil, mit wenigstens einer der Abgabe von Wasser dienenden, Wasserzuführungseinrichtung oder Küchenbrause (13) und mindestens einem Betätigungsorgan (2), wobei die Wasserzuleitungen (6) als ein wenigstens zeitweise vom Wasser durchströmter und als Meßkanal dienender Kanal (7) ausgebildet sind, in dem eine die Durchflußmenge erfassende und mit einer die Durchflußmenge wiedergebenden Anzeige (4) verbundene Einrichtung (10) angeordnet ist,
**dadurch gekennzeichnet,**
daß der Meßkanal (7) als Bypaß und eine definierte Teilmenge der durch die Wasserzuleitung (6) strömenden Wassermenge führend ausgestaltet ist, daß der Meßkanal (7) der Wasserzuleitung (6) nachträglich zuzuordnen ist und eine Einrichtung zur wahlweisen Verringerung der Strömungsquerschnittes des Meßkanals (7) aufweist und daß eine mit der Einrichtung (4) zur Anzeige der Durchflußmenge in Wirkungseingriff stehende und die durch die Einrichtung (10) zur Erfassung der Durchflußmenge gelieferten Parameter umsetzende und die Anzeigenwerte liefernde Elektronik vorgesehen ist, die die verschiedenen Wasserdrücke berücksichtigend ausgestaltet ist.

2. Wasserarmatur nach Anspruch 1,
**dadurch gekennzeichnet,**
daß der Meßkanal (7) in die Wasserzuleitung (6) integriert ist.

3. Wasserarmatur nach Anspruch 1,
**dadurch gekennzeichnet,**
daß jeder Wasserzuleitung (6) ein Meßkanal (7) mit Durchflußgeber (10) zugeordnet ist.

4. Wasserarmatur nach Anspruch 1,
**dadurch gekennzeichnet,**
daß der Meßkanal (7) im Bereich des Wasserauslaufs, z. B. der Küchenbrause (13) angeordnet ist.

5. Wasserarmatur nach Anspruch 1,
**dadurch gekennzeichnet,**
daß der Meßkanal (7) 1/10 der durch die zugeordnete Wasserzuleitung (6) strömende Wassermenge durchführend ausgestaltet ist.

6. Wasserarmatur nach Anspruch 1,
**dadurch gekennzeichnet,**
daß die Einrichtung zur wahlweisen Verringerung des Strömungsquerschnittes eine den Querschnitt des Meßkanals (7) verringernde Einstellschraube (11) ist.

7. Wasserarmatur nach Anspruch 1,
**dadurch gekennzeichnet,**
daß die Anzeige (4) nach Schließen der Armatur (1) selbsttätig in die Nullstellung gehend ausgestaltet ist.

8. Wasserarmatur nach Anspruch 1,
**dadurch gekennzeichnet,**
daß die Anzeige (4) nach Schließen der Armatur 81) selbsttätig zeitverzögernd oder über eine manuell zu betätigende Taste (8) in die Nullstellung gehend ausgestaltet ist.

9. Wasserarmatur nach Anspruch 1,
**dadurch gekennzeichnet,**
daß die Anzeige (4) sowohl die Wasserdurchlaufmenge als auch die Temperatur anzeigend ausgestaltet ist.

10. Wasserarmatur nach Anspruch 1,
**dadurch gekennzeichnet,**
daß die Elektronik einem Chip zugeordnet ist.

11. Wasserarmatur nach Anspruch 1,
**dadurch gekennzeichnet,**
daß der Meßkanal (7) ein Kunststoffrohr ist.

## Claims

1. Water armature, in particular a water mixer armature (1), with at least one water supply pipe (6) for the supply of water, with at least one water outlet valve, with at least one water supply system or kitchen spray nozzle (13) serving to discharge water and at least one operating member (2), wherein the water supply pipes (6) are constructed as a duct (7) with water passing through it at least occasionally and serving as a measurement duct, in which duct a system (10), which monitors the flow and is connected to a display (4) indicating the flow, is arranged, characterised in that the measurement duct (7) is constructed as a bypass and so as to direct a defined portion of the amount of water flowing through the water supply pipe (6); that the measurement duct (7) should be allocated subsequently to the water supply pipe (6) and has a system for selective reduction of the flow cross-section of the measurement duct (7); and that an electronics pack is provided which actively engages with the system (4) for displaying the flow, converts the parameters delivered by the system (10) for monitoring the flow and delivers the display values, said electronics pack being constructed so as to take different water pressures into consideration.

2. Water armature according to Claim 1, characterised in that the measurement duct (7) is integrated into the water supply pipe (6).

3. Water armature according to Claim 1, characterised in that a measurement duct (7) with a flow indicator (10) is allocated to each water supply pipe (6).

4. Water armature according to Claim 1, characterised in that the measurement duct (7) is arranged in the region of the water outlet, e.g. of the kitchen spray nozzle (13).

5. Water armature according to Claim 1, characterised in that the measurement duct (7) is constructed to direct 1/10 of the amount of water flowing through the allocated water supply pipe (6).

6. Water armature according to Claim 1, characterised in that the system for selective reduction of the flow cross-section is an adjustment screw (11) reducing the cross-section of the measurement duct (7).

7. Water armature according to Claim 1, characterised in that the display (4) is constructed to go automatically into neutral position after the armature (1) is closed.

8. Water armature according to Claim 1, characterised in that the display (4) is constructed to go into neutral position, either automatically with time delay or via a manually operated button (8), after the armature (1) is closed.

9. Water armature according to Claim 1, characterised in that the display (4) is constructed to display both the water flow and the temperature.

10. Water armature according to Claim 1, characterised in that the electronics pack is allocated to a chip.

11. Water armature according to Claim 1, characterised in that the measurement duct (7) is a plastic pipe.

## Revendications

1. Robinet à eau, en particulier robinet mélangeur (1), pourvu d'au moins une conduite d'alimentation en eau (6) servant à amener l'eau, d'au moins une soupape d'échappement d'eau, d'au moins un dispositif d'amenée d'eau ou douchette de cuisine (13) servant à la distribution d'eau et d'au moins un organe d'actionnement (2), les conduites d'alimentation en eau (6) étant conformées en canal (7) traversé par l'eau, au moins momentanément, et servant de canal de mesure, dans lequel est placé un dispositif (10) détectant le débit et relié à un affichage (4) reproduisant le débit, caractérisé en ce que le canal de mesure (7) est conformé en canal de dérivation guidant une partie définie de la quantité d'eau s'écoulant dans la conduite d'alimentation en eau, en ce que le montage du canal de mesure (7) doit être postérieur à celui de la conduite d'alimentation en eau (6) et le canal est équipé d'un dispositif permettant de réduire, au choix, la section d'écoulement du canal de mesure (7), et en ce qu'est prévu un dispositif électronique fonctionnant conjointement avec un dispositif (4) d'affichage du débit, qui convertit les paramètres fournis par le dispositif (10) de détection du débit et produit les valeurs d'affichage, dispositif électronique qui est conçu pour tenir compte des différentes pressions de l'eau.

2. Robinet à eau selon la revendication 1, caractérisé en ce que le canal de mesure (7) est intégré dans la conduite d'alimentation en eau (6).

3. Robinet à eau selon la revendication 1, caractérisé en ce qu'est associé, à chaque conduite d'alimentation en eau (6), un canal de mesure (7) avec indicateur de débit (10).

4. Robinet à eau selon la revendication 1, caractérisé en ce que le canal de mesure (7) est situé dans la zone de sortie de l'eau, par exemple dans la zone de la douchette de cuisine (13).

5. Robinet à eau selon la revendication 1, caractérisé en ce que le canal de mesure (7) est conçu pour laisser passer un dixième de la quantité d'eau qui s'écoule dans la conduite d'alimentation en eau (6) qui lui est associée.

6. Robinet à eau selon la revendication 1, caractérisé en ce que le dispositif servant à effectuer une réduction, au choix, de la section d'écoulement, est une vis de réglage (11) réduisant la section transversale du canal de mesure (7).

7. Robinet à eau selon la revendication 1, caractérisé en ce que l'affichage (4) est conçu pour revenir automatiquement à la position zéro une fois que le robinet (1) est fermé.

8. Robinet à eau selon la revendication 1, caractérisé en ce que l'affichage (4) est conçu pour revenir automatiquement à la position zéro, de façon décalée dans le temps ou grâce à une touche (8) manuelle, une fois que le robinet (1) est fermé.

9. Robinet à eau selon la revendication 1, caractérisé en ce que l'affichage (4) est conçu pour afficher aussi bien le débit d'eau que la température.

10. Robinet à eau selon la revendication 1, caractérisé en ce que le dispositif électronique est associé à une puce.

11. Robinet à eau selon la revendication 1, caractérisé en ce que le canal de mesure (7) est un tuyau en matière synthétique.
